# EUROPÄISCHE PATENTSCHRIFT

(11) **EP 1 103 348 B1**
(45) Veröffentlichungstag und Bekanntmachung des Hinweises auf die Patenterteilung: **24.03.2010**
(21) Anmeldenummer: 99811078.7
(22) Anmeldetag: 23.11.1999
(51) Int. Cl.: B25B 5/14, B23K 37/04

(54) **Rahmenschweissvorrichtung**
Frames welding device
Dispositif de soudage de cadres

(43) Veröffentlichungstag der Anmeldung: 30.05.2001
(73) Patentinhaber: Creametal, 3011 Bern (CH)
(72) Erfinder: Zimmermann, Hans, 3011 Bern (CH); Zimmermann, Thomas, 3095 Spiegel b. Bern (CH)
(74) Vertreter: BOVARD AG

(56) Entgegenhaltungen:
- EP-A- 0 849 030
- DE-U- 9 015 425
- DE-U- 9 103 838
- US-A- 5 732 455

## Beschreibung

Die Erfindung betrifft eine Rahmenschweissvorrichtung mit auf einem Gestell angeordneten Auflagen, Anschlägen und Spannmitteln für durch Schweissen miteinander zu einem Rahmen zu verbindende Profile, wobei die Anschläge entsprechend der Länge und Breite des zu schweissenden Rahmens in einer Ebene relativ zueinander verstellbar sind.

Das Schweissen von aus Profilen bestehenden Rahmen ist beispielsweise in der Schlosserei eine sehr häufige Arbeit. Unter Profilen sind im Zusammenhang mit der Erfindung sowohl Hohlprofile als auch Stäbe mit beliebiger Querschnittsform zu verstehen. Solche Rahmen werden bei Gebäuden für Türen, Fenster und Geländer verwendet. Aber auch auf anderen Teilgebieten des Metallbaus benötigt man häufig Rahmen. Ein Problem beim Schweissen von Rahmen besteht darin, die zu verbindenden Profile in einem gewünschten Winkel zueinander anzuordnen, festzuhalten, zu heften, die Abmessungen zu kontrollieren, den Rahmen zu wenden und möglichst ohne Verzug zu schweissen. Bei Rahmen ab etwa einem Meter Länge ist dies kaum mehr durch eine einzige Person zu bewerkstelligen. Deshalb wurden Vorrichtungen geschaffen, mit denen die Profile gespannt werden können.

Derartige Vorrichtungen sind im Handel beispielsweise unter den Bezeichnungen "Jansen-Schweisstisch" und "Variobank" (Lieferant G. + H. Hoffmann, D-79541 Lörrach) erhältlich. Diese zuletzt genannten Vorrichtungen weisen beide einen relativ massiven Unterbau auf, der die Verstell- und Spanneinrichtungen trägt. Der "Jansen-Schweisstisch" lässt sich um eine vertikale Achse drehen, um dem Schweisser der Weg von einer Schweissstelle zur nächsten zu ersparen. Dadurch wird jedoch der Platzbedarf für diese Vorrichtung erheblich vergrössert. Zudem führen die hohen Gesamtgewichte dieser Vorrichtungen von 1'100 bzw. 900 Kg dazu, dass ihr Transport aufwendig ist und sie daher bei Nichtgebrauch nicht ohne weiteres weggestellt werden können. Ein wesentlicher Nachteil dieser beiden Schweisstische besteht darin, dass der Rahmen nicht zwecks beidseitigen Schweissens gewendet werden kann, ohne dass er vom Tisch gelöst und nach dem Wenden erneut aufgespannt wird. Auch dazu sind bei grösseren und gewichtigeren Rahmen zwei Personen nötig.

Ferner sind alle bisher bekannten Schweisstische und ähnliche Spannvorrichtungen so konstruiert, dass die miteinander zu verbindenden Profile auf eine Ebene gespannt werden. Weichen zwei miteinander zu verbindende Profilteile in ihren Abmessungen rechtwinklig zur Spannfläche voneinander ab, ergibt sich auf der der Spannfläche abgewandten Seite eine Stufe, deren Höhe der Differenz der genannten Abmessungen entspricht. Diese Stufe muss nach dem Schweissen durch aufwendige Schleifarbeiten egalisiert werden, wenn das fertige Werkstück, beispielsweise ein Rahmen, eine glatt aussehende Oberfläche erhalten soll. Dennoch ist es nicht immer zu vermeiden, dass der weggeschliffene Bereich am fertigen Produkt sichtbar bleibt.

Eine Schweissvorrichtung für die Herstellung von Geländern ist aus dem DE-U 90 15 425 bekannt, welche für die zu verbindenden Längsprofile Auflagen aufweist, die in der Höhe einzeln verstellbar sind. Die in die Schweissvorrichtung eingesetzten Geländerstäbe sind bezüglich der Längsprofile in der Höhe nicht ausrichtbar.

Der Erfindung liegt die Aufgabe zugrunde, diese Nachteile zu überwinden und eine Rahmenschweissvorrichtung vorzuschlagen, die es ermöglicht, allfällige Massdifferenzen der zu verbindenden Profile auf beide Seiten des Rahmens zu verteilen. Eine weitere Aufgabe der Erfindung besteht darin, eine Rahmenschweissvorrichtung anzugeben, mit welcher der Rahmen in einer einzigen Aufspannung beidseitig geheftet und geschweisst werden kann.

Diese Aufgabe wird erfindungsgemäss dadurch gelöst, dass jeweils zwei einander benachbart angeordnete Auflagen zur Aufnahme der Enden zweier zu verbindender Profile, zwei Anschläge und mindestens ein Spannmittel eine Einheit bilden, die auf einem Schlitten montiert ist, welcher längs eines parallel zu einer im wesentlichen horizontalen Längsachse der Rahmenschweissvorrichtung angeordneten Längsholms verschiebbar ist, wobei jeweils eine dieser zwei Auflagen in einer Richtung senkrecht zur genannten Ebene verstellbar ist.

Durch die verstellbaren Auflagen können die Profile an jeder Verbindungsstelle mit minimalem Aufwand exakt aufeinander ausgerichtet werden und die bei gegebenenfalls vorhandenen Massdifferenzen entstehenden Stufen können minimal gehalte werden, indem die Überstände auf beide Rahmenseiten verteilt werden.

Nach einer besonderen Ausführungsart der Erfindung sind die Längsholme mit den Schlitten und den darauf montierten Einheiten mit den Auflagen, den Anschlägen und die Spannmittel mitsamt den daran festgehaltenen Profilen bezüglich des Gestells um die im wesentlichen horizontale Längsachse schwenkbar. Somit es möglich, beide Seiten eines Rahmens ohne Umspannen in einer bequemen Arbeitshaltung zu heften und fertig zu schweissen, was ohne weiteres durch eine einzige Person ausgeführt werden kann.

Die Verstellbarkeit der Auflagen kann in einfacher weise durch Exzenter oder Stellschrauben erreicht werden. Auch eine Verstellbarkeit mittels Keilen ist denkbar.

Vorzugsweise ist beidseits der genannten horizontalen Achse je ein Längsholm angeordnet. Die Längsholme werden bevorzugt durch Spindeln getragen, mit denen sie gleichzeitig symmetrisch gegeneinander verstellbar sind. Dadurch erreicht man, dass die Verbindungsstellen unabhängig von den Abmessungen des zu schweissenden Rahmens immer gut zugänglich sind und dass sich die gesamte Einheit mit geringem Kraftaufwand wenden lässt.

Wenn die Einheit in bezug auf den Schlitten um eine im wesentlichen parallel zur genannten Achse angeordnete Schwenkachse schwenkbar ist, vermeidet man die unerwünschte Übertragung eines Biegemoments auf die Profile infolge Durchbiegung der Spindeln.

Schliesslich kann eine Rahmenschweissvorrichtung der vorangehend beschriebenen Art so leicht gebaut werden, dass sie einfacher zu transportieren ist als die Vorrichtungen des Standes der Technik- Der Transport der erfindungsgemässen Vorrichtung wird noch einfacher, wenn das Gestell mit Rädern ausgerüstet wird.

Ausführungsbeispiele der Erfindung werden nun unter Bezugnahme auf die Zeichnungen näher erläutert. Es zeigen:
- Figur 1: ein Beispiel einer Eckverbindung eines Rahmens,
- Figur 2: einen Querschnitt durch die Verbindung nach Figur 1,
- Figur 3: eine Schweissvorrichtung nach dem Stand der Technik mit Profilen, deren Masse voneinander abweichen,
- Figur 4: die mit der Vorrichtung nach Figur 3 geschweissten Profile vor dem Schleifen,
- Figur 5: die mit der Vorrichtung nach Figur 3 geschweissten Profile nach dem Schleifen
- Figur 6: eine erste Ausführungsart der Schweissvorrichtung nach der Erfindung mit Profilen, deren Masse voneinander abweichen,
- Figur 7: die mit der Vorrichtung nach Figur 6 geschweissten Profile vor dem Schleifen,
- Figur 8: die mit der Vorrichtung nach Figur 6 geschweissten Profile nach dem Schleifen einer der beiden Schweissnähte,
- Figur 9: eine zweite Ausführungsart der Schweissvorrichtung nach der Erfindung mit Profilen, deren Masse voneinander abweichen,
- Figur 10: einen Grundriss der ersten Ausführungsart der erfindungsgemässen Rahmenschweissvorrichtung,
- Figur 11: einen Querschnitt durch die erste Ausführungsart der erfindungsgemässen Rahmenschweissvorrichtung,
- Figur 12: die Vorrichtung nach Figur 11 in einem verformten Zustand und
- Figur 13: eine perspektivische Teilansicht der ersten Ausführungsart der erfindungsgemässen Rahmenschweissvorrichtung.

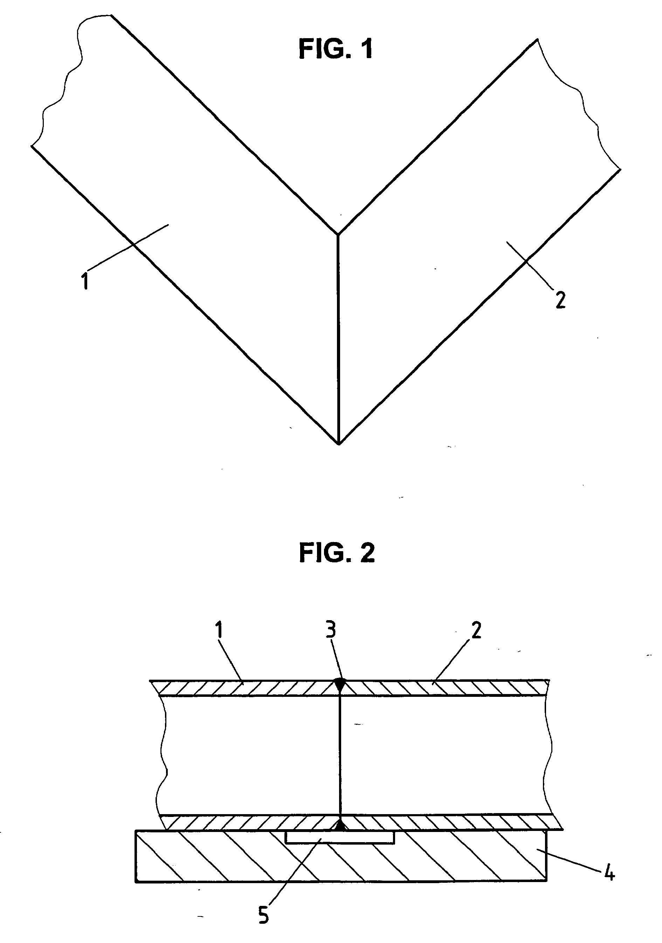

Figur 1 zeigt einen Ausschnitt eines einfachen, aus vier Rechteckrohren bestehenden Rahmens. Die Profile sind in diesem Beispiel auf Gehrung geschnitten, könnten aber auch ausgeklinkt oder gestossen sein. Selbstverständlich können mit der erfindungsgemässen Vorrichtung nicht nur Profile mit rechteckigem Querschnitt geschweisst werden, sondern praktisch beliebige Profile. Beim Schweissen eines solchen Rahmens geht man üblicherweise wie folgt vor. Die Profile, von denen in Figur 1 nur die zwei Profile 1 und 2 sichtbar sind, werden exakt positioniert und mit Spannmitteln festgehalten. Dann werden alle vier Ecken des Rahmens geheftet. Bei bekannten Schweissvorrichtungen müssen nun die Spannmittel gelöst werden, damit der Rahmen gewendet und auf der gegenüberliegenden Seite geschweisst werden kann.

Figur 2 zeigt einen Querschnitt durch die fertig geschweissten Profile 1 und 2 mit den Schweissnähten 3. Der so hergestellte Rahmen liegt noch auf einer Auflage 4 einer Schweissvorrichtung nach dem Stand der Technik, in der im Bereich der Schweissnaht eine Ausnehmung 5 vorhanden ist.

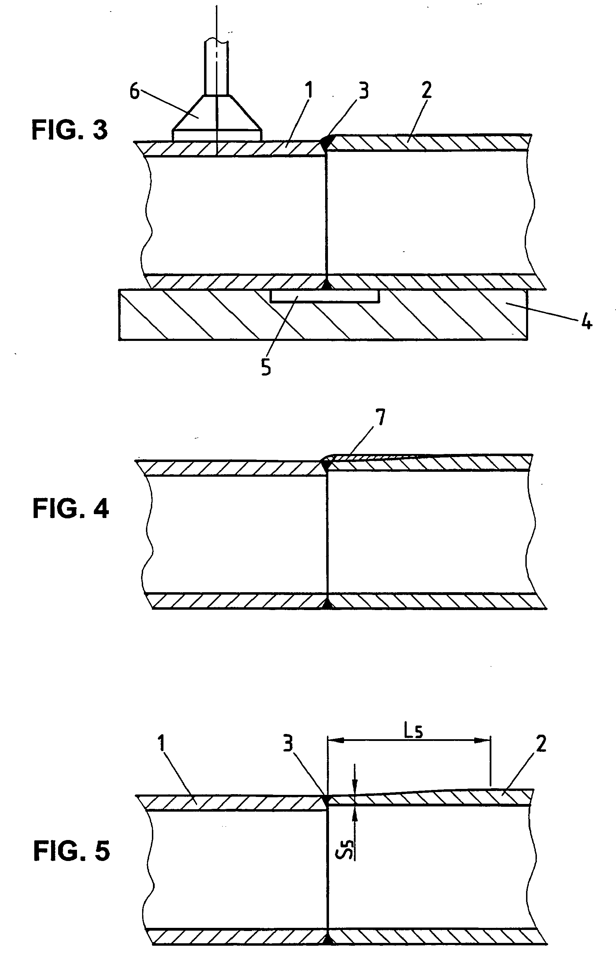

In den Figuren 3 bis 5 ist veranschaulicht, wie sich bei Rahmenschweissvorrichtungen nach dem Stand der Technik Massdifferenzen zwischen den zu verbindenden Profilen auswirken können. Solche Massdifferenzen können entstehen, wenn die zu verbindenden Profile 1, 2 aus verschiedenen Losen stammen und beispielsweise nicht mit dem selben Werkzeug hergestellt wurden. Aber auch beim Zuschneiden der Profile, insbesondere wenn diese dünnwandig sind, können solche Massdifferenzen entstehen, wenn durch das Schneidwerkzeug zu viel Druck auf die Profile ausgeübt wird. Wie eingangs erwähnt, werden die Profile bei Vorrichtungen nach dem Stand der Technik auf eine gemeinsame Ebene gespannt, die hier durch die Auflage 4 definiert ist. Mit 6 ist ein Spannmittel angedeutet. Wie man deutlich sieht, bildet die ganze Massdifferenz bei der von der Auflage 4 abgewandten Schweissnaht 3 eine Stufe. Um diese Stufe auszugleichen, muss das in Figur 4 mit 7 bezeichnete Material abgetragen werden, beispielsweise mit einer Schleifscheibe. Wird zu wenig Material abgetragen, bleibt der Versatz am fertigen Rahmen sichtbar. Insbesondere bei Rahmen mit einer glänzenden, beispielsweise lackierten Oberfläche wirkt dies sehr störend. In Figur 5 ist die fertig geschliffene Verbindung dargestellt, wobei mit L₅ der Schleifbereich angegeben ist, in dem Material abgeschliffen wurde. Diese Darstellung zeigt besonders deutlich einen weiteren, erheblichen Nachteil einer so hergestellten Schweissverbindung. Durch den Versatz und das dadurch bedingte Wegschleifen von Material ist die Wandstärke S₅ des Profils 2 im Bereich der Schweissnaht 3 erheblich geschwächt. Bei dünnwandigen Profilen kann es dadurch sogar vorkommen, dass die Profilwand beim Schleifen durchbrochen wird.

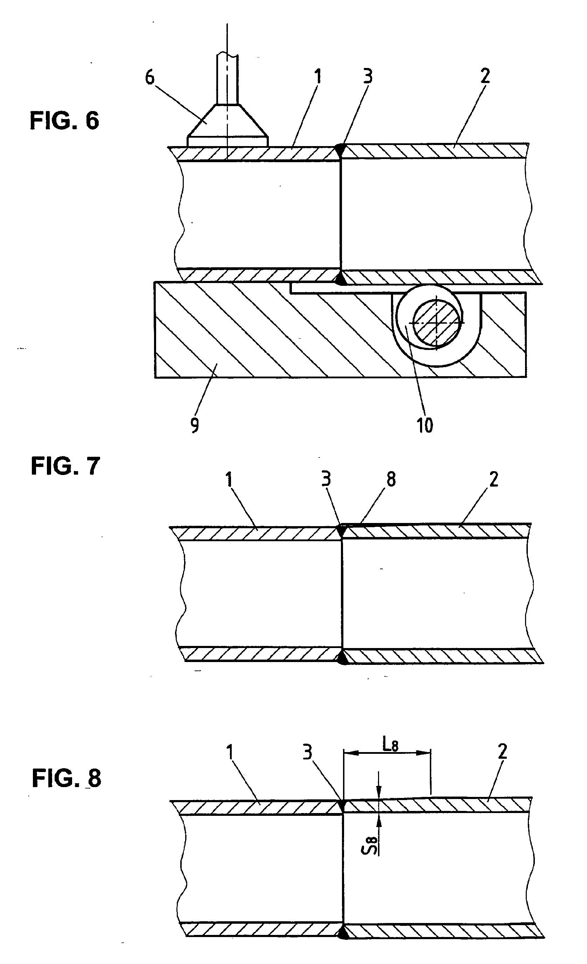

Die Figuren 6 bis 8 zeigen in einer ähnlichen Darstellung wie in den Figuren 3 bis 5 eine erste Ausführungsart der Schweissvorrichtung nach der Erfindung mit denselben Profilen 1 und 2. Die Auflage 9 ist dabei so gestaltet, dass nur eines der Profile 1 durch das Spannmittel 6 darauf niedergedrückt wird. Das andere Profil 2 liegt auf einer separaten Auflage, die in diesem Beispiel durch einen Exzenter 10 gebildet wird. Durch Drehen dieses Exzenters 10 kann die Höhenlage des Profils 2 exakt eingestellt werden. Weisen beide Profile 1 und 2 die gleiche Höhe auf, können sie mittels des Exzenters exakt aufeinander ausgerichtet werden. Weisen die Profile aber eine Massdifferenz auf, kann diese durch Verstellen des Exzenters 10 so verteilt werden, dass auf beiden Seiten des Rahmens ein Versatz entsteht, dessen Abmessung der halben Massdifferenz entspricht, wie dies in den Figuren 6 und 7 deutlich zu sehen ist. Wie mit der Bezugszahl 8 in Figur 7 gezeigt ist, muss bei einem derart geschweissten Rahmen wesentlich weniger Material durch Schleifen abgetragen werden, um eine glatt aussehende Oberfläche zu erhalten. In der Darstellung nach Figur 8 ist die obere Seite des Rahmens fertig geschliffen und man sieht, dass der Schleifbereich L₈ wesentlich kleiner ist, als beim mit einer Vorrichtung nach dem Stand der Technik geschweissten Rahmen gemäss Figur 5. Es liegt auf der Hand, dass es einfacher ist, je eine kleine Stufe auf beiden Seiten des Rahmens wegzuschleifen, als eine grosse. Aber auch die Wandstärke ist bei diesem Beispiel gemäss Figur 8 viel weniger geschwächt, wie ein Vergleich der Masse S₈ und S₅ ohne weiteres zeigt.

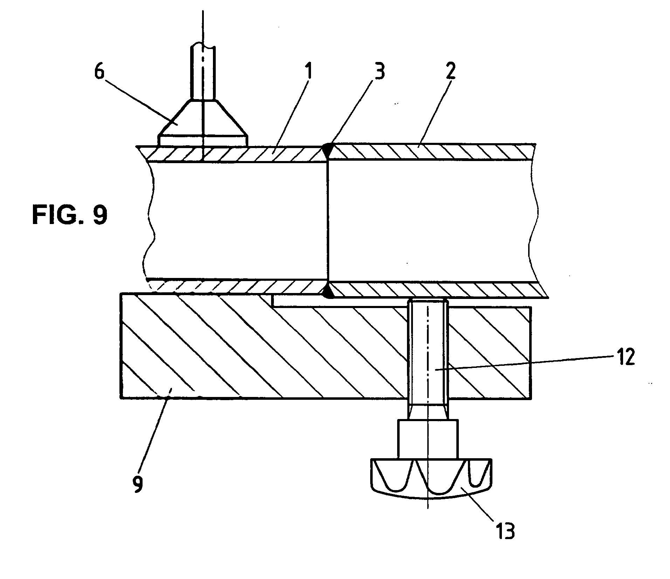

Figur 9 zeigt, dass die Verstellung der Höhe der Auflage für das zweite Profil 2 nicht auf die Lösung mit dem Exzenter 10 beschränkt ist. Anstelle des Exzenters kann beispielsweise auch eine Stellschraube 12 vorgesehen sein, die beispielsweise mir einem Drehknopf 13 bedient werden kann.

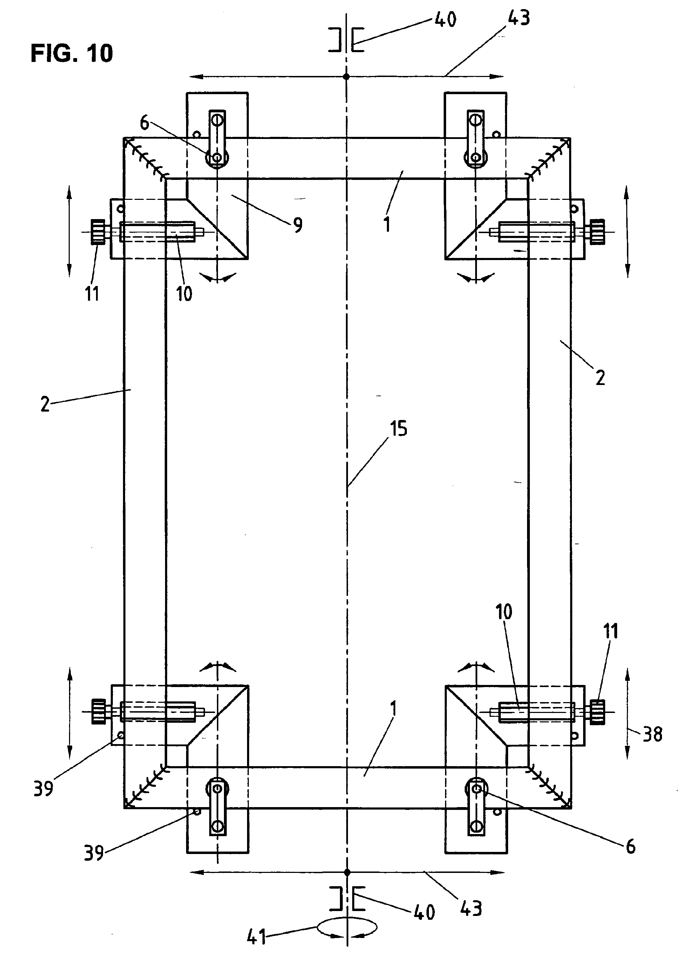

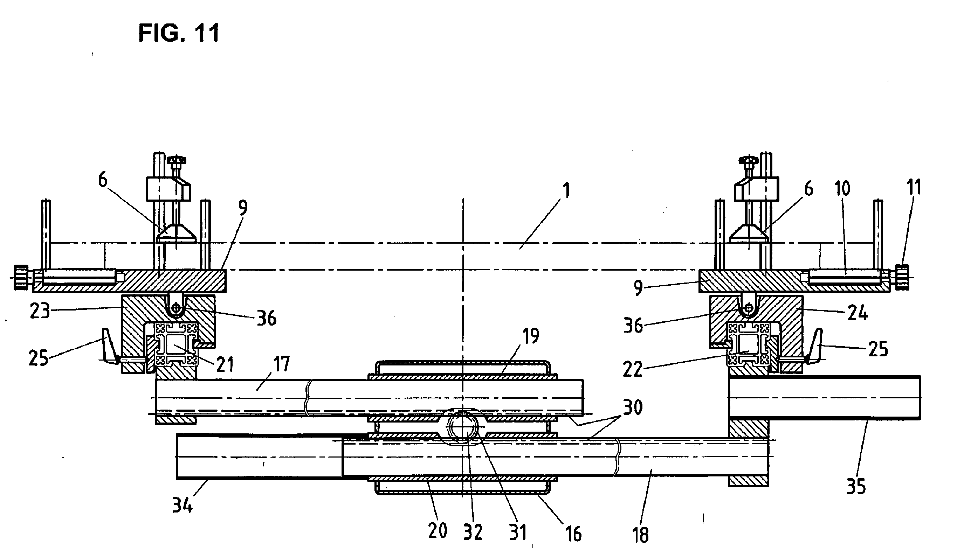

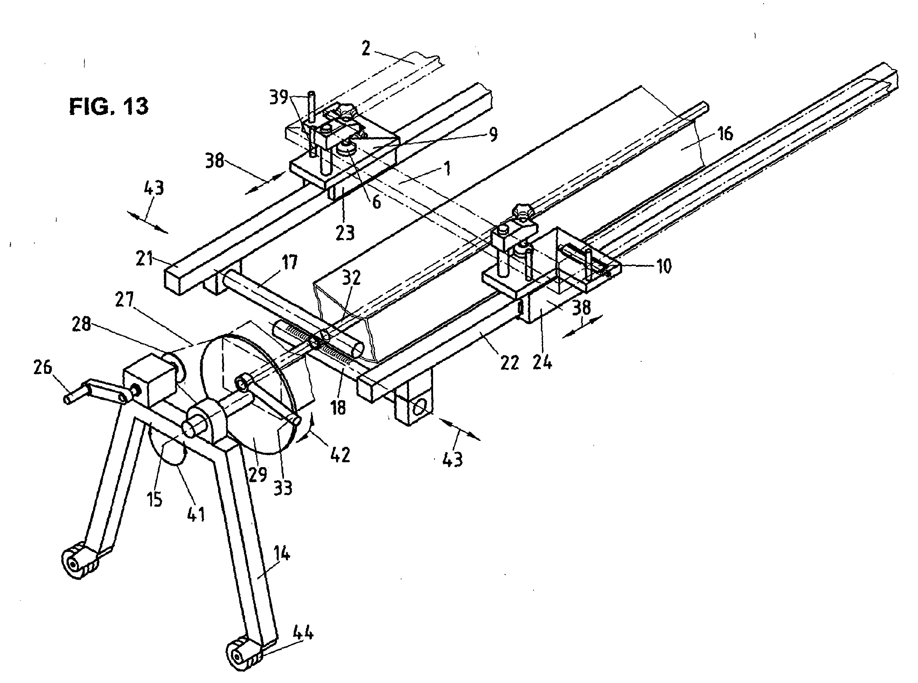

Die wichtigsten Elemente der ersten Ausführungsart der erfindungsgemässen Rahmenschweissvorrichtung werden nun anhand der Figuren 10, 11 und 13 näher erläutert. Figur 10 zeigt einen schematischen Grundriss der Vorrichtung mitsamt einem fertig geschweissten Rahmen. In Figur 11 sieht man einen Querschnitt durch die Vorrichtung nach Figur 10, wobei hier der Rahmen nur mit strichpunktierten Linien angedeutet ist und Figur 13 zeigt einen Teil der Vorrichtung in einer perspektivischen Ansicht, wobei auch hier der Rahmen mit strichpunktierten Linien angedeutet ist. Die ganze Vorrichtung ist auf einem Gestell 14 (siehe Figur 13) derart in Lagern 40 (siehe Figur 10) gelagert, dass sie in Richtung des Doppelpfeils 41 um ihre Längsachse 15 gewendet werden kann, so dass ein Rahmen in einer einzigen Aufspannung beidseitig geschweisst werden kann. Zum Erleichtern dieser Schwenkbewegung hat die Vorrichtung eine Kurbel 26, mit der sie über ein Getriebe, das beispielsweise aus einer Kette 27 und zwei Kettenrädern 28 und 29 bestehen kann, um die Längsachse 15 gewendet werden kann. Insbesondere in Figur 10 ist deutlich zu sehen, dass die Auflage 9 und der Exzenter 10 zwischen sich im Bereich, in dem die Profile 1 und 2 aneinander stossen, genügend Raum frei lassen, so dass nach dem Wenden auch die der Auflage zugewandte Seite des Rahmens gut zugänglich ist und geschweisst werden kann. Ein zentrales, die Längsachse 15 umgebendes kastenförmiges Tragelement 16 nimmt zudem in seinem Inneren Teile des nachfolgend beschriebenen Verstellmechanismus auf. Zwei Paare von Spindeln, von denen in den Figuren 11 bis 13 nur ein Paar 17, 18 sichtbar ist, tragen zwei seitliche Längsholme 21 und 22. Die Längsholme 21 und 22 sind auf ihrer oberen Seite mit je einem (nicht dargestellten) Massstab ausgerüstet, um die Länge des zu schweissenden Rahmens einstellen zu können. Auf jedem Längsholm sitzen zwei Schlitten 23, 24, welche die bereits erwähnten Auflagen 9, 10 tragen und in Richtung der Doppelpfeile 38 auf den Längsholmen verschiebbar sind. Anschlagdorne 39 dienen zum exakten Positionieren der Profile 1, 2. Soll ein Rahmen mit Sprossen versehen werden, ist es ohne weiteres möglich, zur Aufnahme der Sprossen weitere Auflagen 9, 10 mit entsprechenden Schlitten 23, 24 auf den Längsholmen 21, 22 anzuordnen. Die Schlitten sind entlang der Längsholme 21, 22 verschiebbar und mittels einer Arretiervorrichtung 25 in einer gewünschten Lage feststellbar.

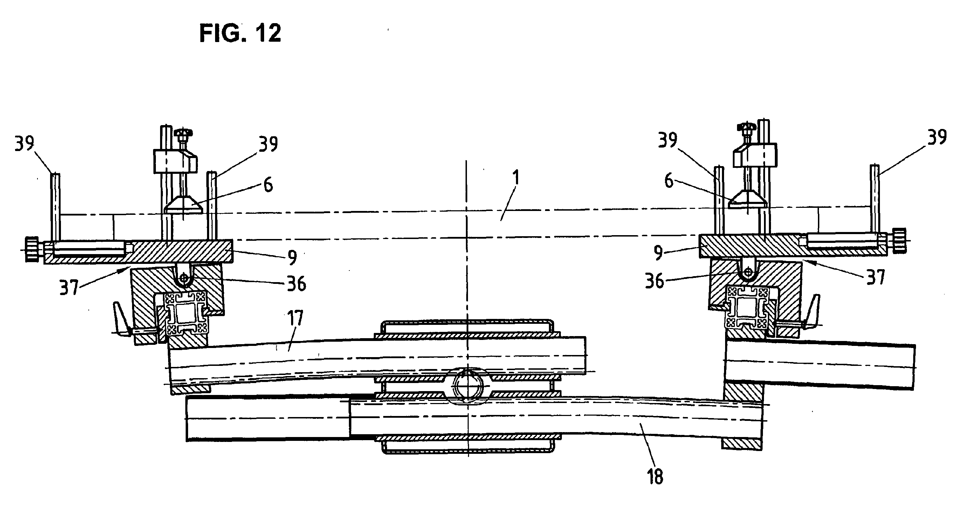

Der gegenseitige Abstand der Längsholme 21 und 22 lässt sich über die Spindeln 17 und 18 mühelos in Richtung des Doppelpfeils 43 einstellen. Dazu sind die Spindeln in Lagern 19 und 20 längsbeweglich geführt und an den einander zugewandten Seiten mit einer Verzahnung 30 versehen. Ein zwischen den Spindeln 17, 18 angeordnetes Ritzel 31 ist mit einer Welle 32 verbunden, welche ihrerseits mittels eines Hebels 33 gedreht werden kann. Im Übertragungsweg zwischen dem Hebel 33, der Welle 32 und dem Ritzel 31 ist eine (nicht dargestellte) Rutschkupplung angeordnet, um eine Überbeanspruchung der Vorrichtung während der Breiten-Verstellbewegung in jedem Fall zu vermeiden. Die obere Spindel 17 ist an ihrer oberen Seite mit einer Skala versehen, an der die eingestellte Breite des zu schweissenden Rahmens abgelesen werden kann. Wie den Figuren 11 und 12 ohne weiteres zu entnehmen ist, bewegen sich die Spindeln 17 und 18 beim Drehen des Ritzels 31 um jeweils den gleichen Betrag aufeinander zu oder voneinander weg. Dies hat einerseits den Vorteil, dass die gesamte Vorrichtung mitsamt aufgespannten Profilen stets bezüglich der Längsachse 15 im Gleichgewicht bleibt, so dass die Schwenkbewegung mit geringem Kraftaufwand bewerkstelligt werden kann. Andererseits wird beim Spannen von schmalen Rahmen auch die gesamte Vorrichtung schmal, wodurch eine optimale Zugänglichkeit der Schweissstellen stets gewährleistet ist und die Schwenkbarkeit ebenfalls erleichtert wird. Werden die Längsholme 21, 22 nahe zueinander bewegt, um einen Rahmen mit geringer Breite zu schweissen, tauchen die Spindeln 17, 18 in dafür vorgesehene Rohre 34 bzw. 35 ein, die am Tragelement 16 bzw. am Längsholm 22 vorgesehen sind.

Bei der beschriebenen Konstruktionsweise, bei der die Längsholme 21 und 22 mitsamt den Schlitten 23 und 24, den Auflagen 9, den darauf aufliegenden Profilen 1 und den Spannmitteln 6 einzig und allein durch die Spindeln 17 und 18 mit dem zentralen Tragelement 16 verbunden sind, ist es nicht zu vermeiden, dass sich die Spindeln unter der Last der genannten Elemente etwas durchbiegen und die genannten Elemente infolgedessen etwas hängen. Dies ist in Figur 12 übertrieben dargestellt. Wären die Auflagen 9 starr mit den Schlitten 23, 24 verbunden, würde den eingespannten Profilen 1 durch die Auflagen 9 und die Spannmittel 6 ein Biegemoment auferlegt, was natürlich in hohem Masse unerwünscht ist. Deshalb ist zwischen den Schlitten und den Auflagen jeweils eine Schwenkachse 36 vorgesehen. Wie es an den durch die Pfeile 37 in Figur gekennzeichneten Stellen besonders deutlich erkennbar ist, kann sich die Auflage 9 in bezug auf den Schlitten 23, 24 neigen, so dass das Profil unbelastet bleibt und ohne Biegespannungen geschweisst werden kann.

Die beschriebene Rahmenschweissvorrichtung kann sehr leicht gebaut werden, so dass sie einfach zu transportieren ist. Durch gegebenenfalls am Gestell 14 angeordnete Räder 44 wird die Transportierbarkeit noch weiter erleichtert. Wenn die Vorrichtung nicht gebraucht wird, kann man die Längsholme 21, 22 ganz zur Längsachse 15 hin verstellen, wodurch die gesamte Vorrichtung nicht breiter ist, als ihr Gestell 14 und somit in der Werkstatt nicht unnötig Platz beansprucht. Eine andere Möglichkeit zum Sparen von Platz bei Nichtgebrauch besteht darin, dass man die Kurbel 26 betätigt, bis sich die Längsholme 21, 22 etwa in einer vertikalen Ebene befinden.

## Patentansprüche

1. Rahmenschweissvorrichtung mit auf einem Gestell (14) angeordneten Auflagen (9, 10; 12), Anschlägen (39) und Spannmitteln (6) für durch Schweissen miteinander zu einem Rahmen zu verbindende Profile (1, 2), wobei die Anschläge (39) entsprechend der Länge und Breite des zu schweissenden Rahmens in einer Ebene relativ zueinander verstellbar sind, **dadurch gekennzeichnet, dass** jeweils zwei einander benachbart angeordnete Auflagen (9, 10; 12) zur Aufnahme der Enden zweier zu verbindender Profile (1, 2), zwei Anschläge (39) und mindestens ein Spannmittel (6) eine Einheit bilden, die auf einem Schlitten (23, 24) montiert ist, welcher längs eines parallel zur einer im wesentlichen horizontalen Längsachse (15) der Rahmenschweissvorrichtung angeordneten Längsholms (21, 22) verschiebbar ist, wobei jeweils eine (10; 12) dieser zwei Auflagen (9, 10; 12) in einer Richtung senkrecht zur genannten Ebene verstellbar ist.

2. Rahmenschweissvorrichtung nach Anspruch 1, **dadurch gekennzeichnet, dass** die Längsholme (20, 21) mit den Schlitten (23, 24) und den darauf montierten Einheiten mit den Auflagen (9, 10; 12), den Anschlägen (39) und die Spannmittel (6) mitsamt den daran festgehaltenen Profilen (1, 2) bezüglich des Gestells (14) um die im wesentlichen horizontale Längsachse (15) schwenkbar sind.

3. Rahmenschweissvorrichtung nach Anspruch 1 oder 2, **dadurch gekennzeichnet, dass** die verstellbare Auflage als Exzenter (10) ausgebildet ist, dessen Achse parallel zur genannten Ebene angeordnet ist.

4. Rahmenschweissvorrichtung nach Anspruch 1 oder 2, **dadurch gekennzeichnet, dass** die verstellbare Auflage als Stellschraube (12) ausgebildet ist, deren Achse senkrecht zur genannten Ebene angeordnet ist.

5. Rahmenschweissvorrichtung nach einem der Ansprüche 1 bis 4, **dadurch gekennzeichnet, dass** beidseits der genannten horizontalen Achse (15) je ein Längsholm (21, 22) angeordnet ist und dass die Längsholme durch Spindeln (17, 18) getragen werden, mit denen sie gleichzeitig symmetrisch gegeneinander verstellbar sind.

6. Rahmenschweissvorrichtung nach einem der Ansprüche 1 bis 5, **dadurch gekennzeichnet, dass** die Einheit in Bezug auf den Schlitten (23, 24) um eine im wesentlichen parallel zur genannten Achse (15) angeordnete Schwenkachse (36) schwenkbar ist.

## Claims

1. Frame welding device with rests (9, 10; 12) disposed on a rack (14), stops (39) and clamping means (6) for sections (1, 2) to be connected by welding together into a frame, the stops (39) being adjustable, corresponding to the length and width of the frame to be welded, relative to one another in a plane, **characterised in that** two rests (9, 10; 12) each, disposed adjacent each other, for receiving the ends of two sections to be connected (1, 2), two stops (39) and at least one clamping means (6) form a unit, which is mounted on a slide (23, 24), which is displaceable along a longitudinal beam (21, 22) disposed parallel to a substantially horizontal longitudinal axis (15) of the frame welding device, in each case one (10; 12) of these two rests (9, 10; 12) being adjustable in a direction perpendicular to said plane.

2. Frame welding device according to claim 1, **characterised in that** the longitudinal beams (20, 21) with the slide (23, 24) and the units mounted thereon with the rests (9, 10; 12), the stops (39) and the clamping means (6) including the sections (1, 2) firmly held thereon are pivotable with respect to the rack (14) about the substantially horizontal longitudinal axis (15).

3. Frame welding device according to claim 1 or 2, **characterised in that** the adjustable rest is designed as eccentric (10), the axis of which is disposed parallel to said plane.

4. Frame welding device according to claim 1 or 2, **characterised in that** the adjustable rest is designed as set screw (12), the axis of which is disposed perpendicular to said plane.

5. Frame welding device according to one of the claims 1 to 4, **characterised in that** on both sides of said horizontal axis (15) one longitudinal beam (21, 22) each is disposed and **in that** the longitudinal beams are borne by spindles (17, 18), with which they are simultaneously symmetrically adjustable with respect to one another.

6. Frame welding device according to one of the claims 1 to 5, **characterised in that** the unit is pivotable with respect to the slide (23, 24) about a pivot axis (36) substantially parallel to said axis (15).

## Revendications

1. Dispositif de soudage de cadre avec des appuis (9, 10; 12) disposés sur un bâti (14), des butées (39) et des moyens de serrage (6) pour les profilés (1, 2) à relier entre eux par soudage en un cadre, les butées (39) étant réglables de manière relative entre elles dans un plan en fonction de la longueur et de la largeur du cadre à souder, **caractérisé en ce que** respectivement deux appuis (9, 10; 12) disposés l'un à côté de l'autre pour le logement des extrémités de deux profilés à relier (1, 2), deux butées (39) et au moins un moyen de serrage (6) forment une unité qui est montée sur un chariot (23, 24) coulissant le long d'un longeron (21. 22) disposé parallèlement à un axe longitudinal (15) sensiblement horizontal du dispositif de soudage de cadre, respectivement un (10; 12)) des ces deux appuis (9; 10; 12) étant réglable dans une direction perpendiculaire audit plan.

2. Dispositif de soudage de cadre selon la revendication 1, **caractérisé en ce que** les longerons (20, 21) avec les chariots (23; 24) et les unités montées dessus avec les appuis (9; 10; 12), les butées (39) et les moyens de serrage (6) sont pivotants avec les profilés (1, 2) fixés dessus par rapport au bâti (14) autour de l'axe longitudinal (15) sensiblement horizontal.

3. Dispositif de soudage de cadre selon la revendication 1 ou 2, **caractérisé en ce que** l'appui réglable est réalisé comme un excentrique (10) dont l'axe est disposé parallèlement audit plan.

4. Dispositif de soudage de cadre selon la revendication 1 ou 2, **caractérisé en ce que** l'appui réglable est réalisé comme une vis de réglage (12) dont l'axe est disposé perpendiculairement audit plan.

5. Dispositif de soudage de cadre selon l'une des revendications 1 à 4, **caractérisé en ce que** des deux côtés dudit axe horizontal (15) est disposé respectivement un longeron (21, 22) et **en ce que** les longerons sont portés par des broches (17, 18) permettant de les régler en même temps symétriquement entre eux.

6. Dispositif de soudage de cadre selon l'une des revendications 1 à 5, **caractérisé en ce que** l'unité est pivotante par rapport aux chariots (23, 24) autour d'un axe pivotant (36) disposé sensiblement parallèlement audit axe (15).
